# EUROPÄISCHE PATENTSCHRIFT

(11) **EP 4 153 413 B1**
(45) Veröffentlichungstag und Bekanntmachung des Hinweises auf die Patenterteilung: **10.07.2024**
(21) Anmeldenummer: 21727389.5
(22) Anmeldetag: 14.05.2021
(51) Int. Cl.: B30B 15/04, B21J 7/02, F16M 1/00, B23Q 1/01, B21J 13/04, B21J 9/12

(54) **QUERHAUPT ZUR VERWENDUNG ALS OBER- UND/ODER UNTERHOLM IN EINER PRESSE**
CROSSHEAD FOR USE AS AN UPPER AND/OR LOWER BEAM IN A PRESS
CROSSE DESTINÉE À ÊTRE UTILISÉE COMME POUTRE SUPÉRIEURE ET/OU INFÉRIEURE DANS UNE PRESSE

(30) Priorität: 18.05.2020 DE 102020206223
(43) Veröffentlichungstag der Anmeldung: 29.03.2023
(73) Patentinhaber: SMS Group GmbH, 40237 Düsseldorf (DE)
(72) Erfinder: HÜSGEN, David, 41352 Korschenbroich (DE); BÜSCH, Michael, 41749 Viersen (DE); HOUARI, Mohamed, 44577 Castrop-Rauxel (DE); KNAUF, Frederik, 52385 Nideggen-Abenden (DE)
(74) Vertreter: Kross, Ulrich
(86) Internationale Anmeldenummer: PCT/EP2021/062817
(87) Internationale Veröffentlichungsnummer: WO 2021/233779

(56) Entgegenhaltungen:
- CN-A- 103 507 291
- CN-A- 104 647 799
- DE-A1- 10 344 635
- DE-A1- 102009 034 267
- DE-A1- 102017 221 126
- DE-U1- 202018 003 840

## Beschreibung

Die vorliegende Erfindung betrifft ein Querhaupt zur Verwendung als Oberholm in einer Presse, insbesondere in einer Freiformschmiedepresse oder einer Gesenkschmiedepresse, sowie eine Presse, insbesondere eine Freiformschmiedepresse oder einer Gesenkschmiedepresse, umfassend den erfindungsgemäßen Querhaupt.

Derartige Querhäupter bilden Bauteile großer Bauart. Aufgrund der enormen Presskräfte von 1 MN bis 200 MN, der die Querhäupter im Belastungsfall in einer Presse ausgesetzt sind, werden diese in massiver und wuchtiger Bauweise ausgeführt. Daher weisen die aus dem Stand der Technik bekannten Querhäupter in der Regel ein Gewicht von mehreren 100 t auf.

Da der Trend zu größeren Anlagen und Maschinen weiterhin anhält, kommen Gussstücke bei Fragen des Gewichtes und des Materialeinsatzes mittlerweile an Ihre gießtechnischen Grenzen. Des Weiteren kommen bei derartigen Bauteilen logistische Probleme hinzu, da nicht nur die Handhabung, sondern auch deren Transport äußerst kompliziert ist.

Ein in massiver und wuchtiger Bauweise ausgeführtes Querhaupt ist beispielsweise aus der DE 10 2013 108 299 A1 bekannt. Der als Oberholm ausgeführte Querhaupt ist zur Verwendung in einer Schmiedepresse vorgesehen und umfasst einen Obergurt sowie einen mit dem Obergurt über einen ersten und einen zweiten Seitenständer aus Vollmaterial verbundenen Untergurt. Der Obergurt wird dabei über massive Seitenwände zusätzlich abgestützt, die sich zwischen den Seitenständern axial erstrecken.

Die deutsche Offenlegungsschrift DE 103 44 635 A1 offenbart ein Querhaupt gemäss dem Oberbegriff des Anspruchs 1 und betrifft eine Werkzeugmaschine, insbesondere Umformmaschine mit einem Maschinengestell und zumindest einem Werkzeug- oder Werkstückträger, der an dem Maschinengestell gelagert ist, wobei das Maschinengestell zumindest eine Tragwerkanordnung mit einer Mehrzahl von Streben aufweist, wobei einzelne der Streben in Knotenpunkten miteinander verbunden sind und der Werkzeug- oder Werstückträger an mindestens einem der Knotenpunkte der Tragwerkanordnung gelagert ist.

Aus der chinesischen Patentanmeldung CN 104 999 693 A ist zudem eine Pressenbasis bekannt, die zwei obere und untere Außenrahmen umfasst, wobei die beiden oberen und unteren Außenrahmen parallel angeordnet sind, und zwei seitliche Seitenplatten und zwei seitliche Längsträger zwischen den beiden oberen und unteren Außenrahmen angeordnet sind, wobei die beiden seitlichen Seitenplatten und die beiden seitlichen Längsträger senkrecht zu den beiden oberen und unteren Außenrahmen angeordnet sind, und ein zentraler Rohrkörper in der Mitte der beiden oberen und unteren Außenrahmen angeordnet ist, wobei der zentrale Rohrkörper und die beiden oberen und unteren Außenrahmen vertikal sind und der zentrale Rohrkörper ein kreisförmiges Durchgangsloch ist.

Vor diesem Hintergrund ist Aufgabe der vorliegenden Erfindung, einen gegenüber dem Stand der Technik verbesserten Querhaupt sowie eine verbesserte Presse, insbesondere eine verbesserte Freiformschmiedepresse oder eine Gesenkschmiedepresse, bereitzustellen.

Diese Aufgabe wird gelöst mit einem Querhaupt gemäß den Merkmalen des unabhängigen Anspruchs 1 sowie einer Presse mit den Merkmalen des unabhängigen Anspruchs 8.

Der Querhaupt ist zur Verwendung als Oberholm in einer Presse, insbesondere einer Freiformschmiedepresse oder einer Gesenkschmiedepresse, vorgesehen und umfasst einen Obergurt sowie einen mit dem Obergurt über einen ersten und einen zweiten Seitenständer verbundenen Untergurt, wobei der erste Seitenständer im Bereich eines ersten distalen Endes und der zweite Seitenständer im Bereich eines zweiten distalen Endes des Querhaupts angeordnet ist.

Erfindungsgemäß weist das Querhaupt zwischen den beiden Seitenständern eine Fachwerktragstruktur auf, über die der Obergurt und der Untergurt zusätzlich miteinander verbunden sind. Die erfindungsgemäße Fachwerktragstruktur erlaubt dabei eine volle Flexibilität bei der Auslegung der Konstruktion zwischen dem Gesamtgewicht und den mechanischen Parametern. So kann das Gesamtgewicht unter Beibehaltung der mechanischen Parameter, beispielsweise unter Beibehaltung der Steifigkeit und/oder der im Belastungsfall auftretenden Spannungen, um bis zu 20 % reduziert werden. Aufgrund des Gesamtgewichts von mehreren Tonnen wirkt sich dies nicht nur vorteilhaft auf die Herstellungskosten, sondern insbesondere auf den Transport derartiger Querhäupter aus. Sofern die Gewichtsreduktion nicht im Vordergrund steht, so können alternativ unter Beibehaltung des Gesamtgewichts die mechanischen Eigenschaften signifikant verbessert werden.

Ein weiterer Vorteil besteht zudem darin, dass durch die Fachwerktragstruktur eine bessere Zugänglichkeit zu den im eingebauten Zustand des Querhaupts montierten Komponenten, wie beispielsweise dem Presszylinder und/oder dem Anstellzylinder, erzielbar ist.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorteilhafterweise ist vorgesehen, dass auch die beiden Seitenständer eine Fachwerktragstruktur aufweisen, über die eine weitere Gewichtsreduktion erzielbar ist.

Erfindungsgemäß weist der Obergurt und der Untergurt eine jeweils zentrisch angeordnete und zueinander in einer Flucht liegende Öffnung auf, die einen mittleren Bereich des Querhaupts definieren und zur Verbindung des Querhaupts mit einem Hauptzylinder der Presse vorgesehen sind. Ein derart ausgebildetes Querhaupt ist vorzugsweise zur Verwendung als Oberholm vorgesehen.

Erfindungsgemäß weist der Obergurt und der Untergurt weiterhin jeweils beidseitig der zentrischen Öffnung eine zueinander in einer Flucht liegende weitere Öffnung zur Verbindung mit einem ersten und einem zweiten Presszylinder der Presse auf.

Vorteilhafterweise ist die Fachwerktragstruktur dabei derart ausgebildet, dass keine zylinderförmigen Hülsen erforderlich sind, um die jeweiligen Zylinder an dem Querhaupt anzuordnen und mit diesem zu fixieren.

Weiterhin ist vorzugsweise vorgesehen, dass die Fachwerktragstruktur mehrere um die beiden zentrischen Öffnungen angeordnete Versteifungsrippen umfasst, die den Obergurt und den Untergurt im mittleren Bereich des Querhaupts miteinander verbinden. Die Versteifungsrippen dienen dabei primär zum Abfangen des Obergurts, der im Belastungsfall durch die Presskraft des mittig angeordneten Hauptzylinders eine Durchbiegung erfährt.

In einer Ausführungsvariante ist der Obergurt des Querhaupts, insbesondere des Oberholms, bogenförmig ausgebildet. Da die Durchbiegung eines derart ausgebildeten Obergurts zu einer höheren Belastung der beiden distalen Enden des Obergurts führt, ist vorzugsweise vorgesehen, dass die Versteifungsrippen V-förmig ausgebildet sind, um dieser höheren Belastung entgegenzuwirken.

In einer alternativen Ausführungsvariante ist der Obergurt des Querhaupts, insbesondere des Oberholms, flach ausgebildet. Da die Durchbiegung eines derart ausgebildeten Obergurts zu keiner höheren Belastung der beiden distalen Enden des Obergurts führt, ist vorzugsweise vorgesehen, dass die Versteifungsrippen vertikal ausgebildet sind.

Erfindungsgemäß ist zudem vorgesehen, dass die Fachwerktragstruktur mehrere quer verlaufende Spannungsrippen umfasst, die sich vom mittleren Bereich des Untergurts in Richtung der Stirnseiten des Obergurts erstrecken und mit den Seitenständern fest verbunden sind. Über die Spannungsrippen können die während eines Schmiedeprozesses auftretenden Spannungen vom Spannungszentrum zielgerichtet nach außen zu den Zugankern und sodann in die Seitenständer der Presse abgeleitet werden.

Ferner ist erfindungsgemäß vorgesehen, dass jeweils zwei parallel zueinander angeordnete Spannungsrippen über ein flächiges Element miteinander verbunden sind und dieses zusätzlich eine Öffnung aufweist, die in einer Flucht mit den beiden Presszylinder-Öffnungen liegt. Die hierdurch zusätzlich geschaffene Fläche zwischen den jeweiligen Spannungsrippen erlaubt einen besseren Kraftfluss und daher eine verbesserte Ableitung der während des Schmiedeprozesses auftretenden Spannungen.

Vorzugsweise ist das Querhaupt mittels eines Urformverfahrens, insbesondere mittels eines Gießverfahrens, hergestellt. Dieses eignet sich besonders vorteilhaft, da hierdurch sehr komplexe Strukturen abbildbar sind. In einer alternativen Ausführungsvariante ist das Querhaupt mittels eines 3D-Druckverfahrens hergestellt.

In einem weiteren Aspekt betrifft die vorliegende Erfindung eine Presse, insbesondere eine Freiformschmiedepresse oder eine Gesenkschmiedepresse, umfassend das erfindungsgemäße Querhaupt. Derartige Pressen sind in großer Bauart ausgeführt und erlauben die Bearbeitung von Schmiedestücken mit Presskräften von mindestens 1 MN bis 100 MN, mehr bevorzugt von 8 MN bis 200 MN.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine erste Ausführungsvariante des erfindungsgemäßen Querhaupts in einer perspektivischen Darstellung,
Fig. 2 die Ausführungsvariante gemäß Figur 1 in einer seitlichen Darstellung,
Fig. 3 eine zweite Ausführungsvariante des erfindungsgemäßen Querhaupts in einer perspektivischen Darstellung,
Fig. 4 die Ausführungsvariante gemäß Figur 3 in einer seitlichen Darstellung, und
Fig. 5 eine Ausführungsvariante einer Presse mit einem Querhaupt gemäß der zweiten Ausführungsvariante.

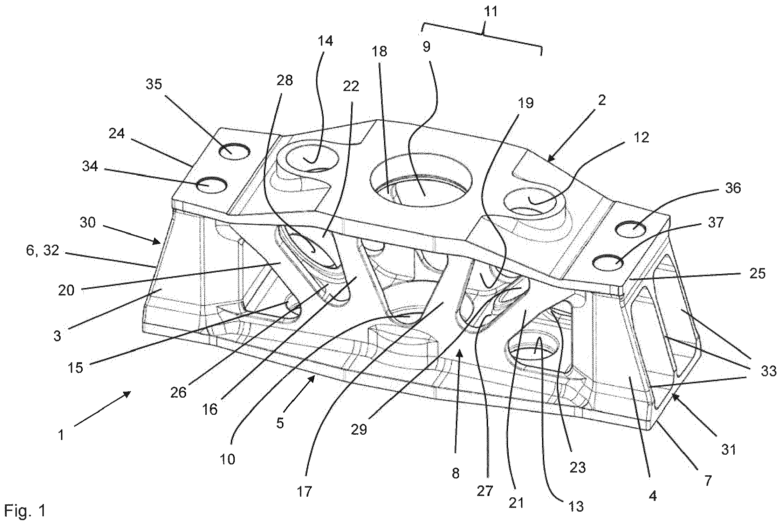

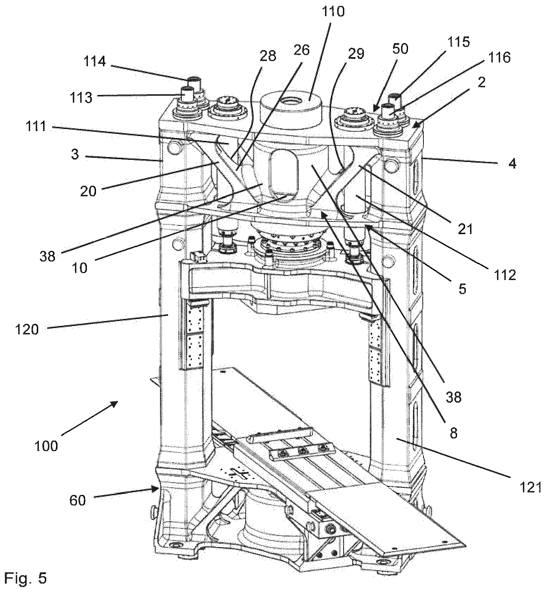

Figur 1 zeigt eine erste Ausführungsvariante des erfindungsgemäßen Querhaupts 1, der in der vorliegend gezeigten Ausführungsvariante zur Verwendung als Oberholm 50 in einer Presse, wie einer Freiformschmiedepresse 100 (siehe Figur 5), vorgesehen ist. Das Querhaupt 1 umfasst einen Obergurt 2 sowie einen mit dem Obergurt 2 über einen ersten und einen zweiten Seitenständer 3, 4 verbundenen Untergurt 5. Der erste Seitenständer 3 ist im Bereich eines ersten distalen Endes 6 und der zweite Seitenständer 4 im Bereich eines zweiten distalen Endes 7 des Querhaupts 1 angeordnet. Wie anhand der Darstellung in Figur 1 erkennbar, weist das Querhaupt 1 zwischen den beiden Seitenständern 3, 4 eine Fachwerktragstruktur 8 auf, über die der Obergurt 2 und der Untergurt 5 zusätzlich miteinander verbunden sind.

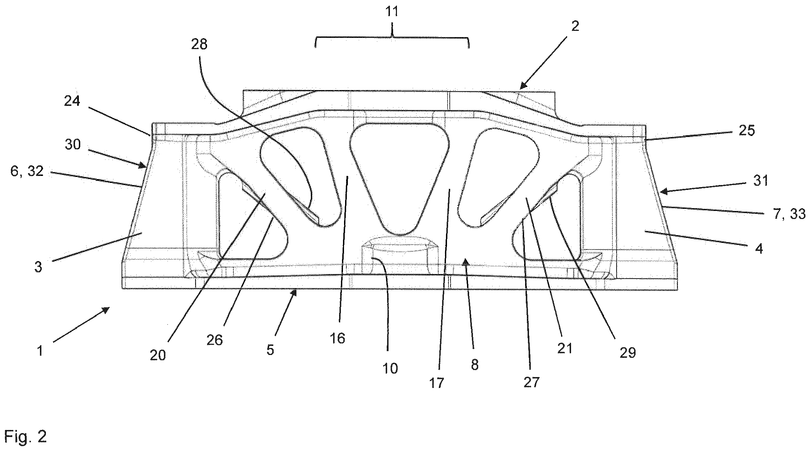

Zur Anordnung eines Hauptzylinders 110, wie in Figur 2 gezeigt, weist sowohl der Obergurt 2 als auch der Untergurt 5 eine jeweils zentrisch angeordnete und zueinander in einer Flucht liegende Öffnung 9, 10 auf. Der Bereich um die zentrischen Öffnungen 9, 10 herum bildet hierbei einen mittleren Bereich 11 des Querhaupts 1.

Beidseitig der beiden zentrischen Öffnungen 9, 10 umfasst der Obergurt 2 als auch der Untergurt 5 jeweils eine zueinander in einer Flucht liegende weitere Öffnung 12, 13, 14, 15, die zur Verbindung des Querhaupts 1 in Form des Oberholms 50 mit einem ersten und einem zweiten Presszylinder 111, 112 der Presse 100 dient.

Die Fachwerktragstruktur 8 weist in der vorliegend dargestellten Ausführungsvariante vier um die beiden zentrischen Öffnungen 9, 10 angeordnete Versteifungsrippen 16, 17, 18, 19 auf, die den Obergurt 2 und den Untergurt 5 im mittleren Bereich 11 des Querhaupts 1 miteinander verbinden. Wie anhand der Figur 1 erkennbar, ist der Obergurt 2 in der gezeigten Ausführungsvariante bogenförmig, wohingegen der Untergurt 5 flach ausgebildet ist. Aufgrund dieser bogenförmigen Ausgestaltung des Obergurts 2 sind die Versteifungsrippen 16, 17 bzw. 18, 19 jeweils V-förmig zueinander angeordnet.

Ferner umfasst die Fachwerktragstruktur 8 in der vorliegend dargestellten Ausführungsvariante vier quer verlaufende Spannungsrippen 20, 21, 22, 23, die sich jeweils vom mittleren Bereich 11 des Untergurts 5 in Richtung der Stirnseiten 24, 25 des Obergurts 2 erstrecken und mit dem jeweiligen Seitenständer 3, 4 fest verbunden sind. Die Spannungsrippen 20, 22 sowie 21, 23 sind jeweils über ein flächiges Element 26, 27 miteinander fest verbunden. Jedes der beiden flächigen Elemente 26, 27 weist zusätzlich eine Öffnung 28, 29 auf. Die Öffnung 28 liegt dabei in einer Flucht mit den Presszylinder-Öffnungen 14, 15, wohingegen die Öffnung 29 in einer Flucht mit den beiden Presszylinder-Öffnungen 12, 13 liegt.

Wie weiterhin anhand der Figur 1 erkennbar, umfassen in der vorliegend dargestellten Ausführungsvariante auch die beiden Seitenständer 3, 4 eine Fachwerktragstruktur 30, 31, die jeweils aus mehreren Tragrippen 32, 33 gebildet ist. Über die beiden Seitenständer 3, 4 wird das Querhaupt 1 mit Seitenständern 120, 121 der Presse 100 über Zuganker 113, 114, 115, 116 verbunden (Figur 5), die sich durch Zuganker-Öffnungen 34, 35, 36, 37 des Querhaupts 1 erstrecken.

Figur 2 zeigt den Querhaupt 1 gemäß der in Figur 1 gezeigten Ausführungsvariante nochmals in einer seitlichen Darstellung.

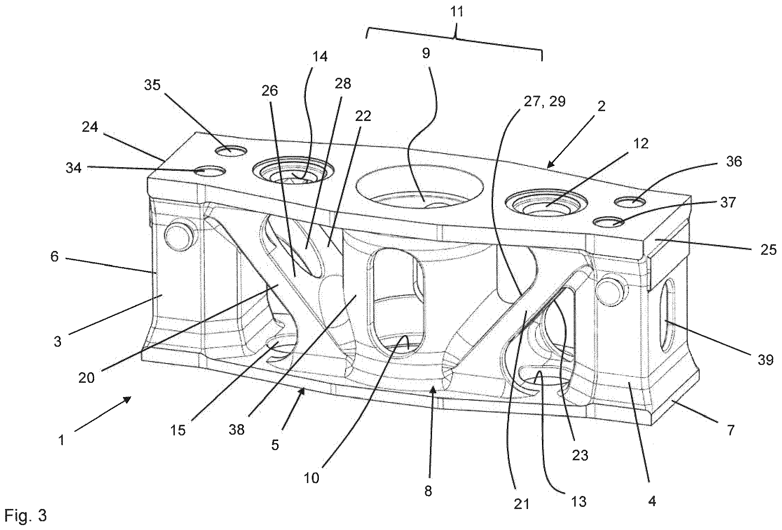

In Figur 3 ist eine zweite Ausführungsvariante des erfindungsgemäßen Querhaupts 1 dargestellt, das ebenfalls einen Obergurt 2 sowie einen mit dem Obergurt 2 über einen ersten und einen zweiten Seitenständer 3, 4 verbundenen Untergurt 5 umfasst.

Der erste Seitenständer 3 ist im Bereich eines ersten distalen Endes 6 und der zweite Seitenständer 4 im Bereich eines zweiten distalen Endes 7 des Querhaupts 1 angeordnet. Auch der vorliegend dargestellte Querhaupt 1 weist zwischen den beiden Seitenständern 3, 4 eine Fachwerktragstruktur 8 auf, über die der Obergurt 2 und der Untergurt 5 zusätzlich miteinander verbunden sind.

Zur Anordnung eines Hauptzylinders 110, wie in Figur 5 gezeigt, weist sowohl der Obergurt 2 als auch der Untergurt 5 eine jeweils zentrisch angeordnete und zueinander in einer Flucht liegende Öffnung 9, 10 auf. Der Bereich um die zentrischen Öffnungen 9, 10 herum bildet hierbei einen mittleren Bereich 11 des Querhaupts 1. Beidseitig der beiden zentrischen Öffnungen 9, 10 umfasst der Obergurt 2 als auch der Untergurt 5 jeweils eine zueinander in einer Flucht liegende weitere Öffnung 12, 13, 14, 15, die zur Verbindung des Querhaupts 1 in Form des Oberholms 50 mit einem ersten und einem zweiten Presszylinder 111, 112 der Presse 100 dient.

Die Fachwerktragstruktur 8 weist in der vorliegend dargestellten Ausführungsvariante mehrere sich vertikal erstreckende Versteifungsrippen 38 auf, die den Obergurt 2 und den Untergurt 5 im mittleren Bereich 11 des Querhaupts 1 miteinander verbinden. Wie anhand der Darstellung erkennbar, sind die mehreren Versteifungsrippen 38 umfangsseitig der beiden zentrischen Öffnungen 9, 10 angeordnet. Im Unterschied zu der in den Figuren 1 und 2 gezeigten Ausführungsvariante ist der Obergurt 2 daher, wie auch der Untergurt 5, flach ausgebildet.

Ferner umfasst die Fachwerktragstruktur 8 in der vorliegend dargestellten Ausführungsvariante vier quer verlaufende Spannungsrippen 20, 21, 22, 23, die sich jeweils vom mittleren Bereich 11 des Untergurts 5 in Richtung der Stirnseiten 24, 25 des Obergurts 2 erstrecken und mit dem jeweiligen Seitenständer 3, 4 fest verbunden sind. Die Spannungsrippen 20, 22 sowie 21, 23 sind ebenfalls jeweils über ein flächiges Element 26, 27 miteinander fest verbunden, wobei jedes der beiden flächigen Elemente 26, 27 zusätzlich eine Öffnung 28, 29 aufweist. Die Öffnung 28 liegt dabei in einer Flucht mit den Presszylinder-Öffnungen 14, 15, wohingegen die Öffnung 29 in einer Flucht mit den beiden Presszylinder-Öffnungen 12, 13 liegt.

Wie weiterhin anhand der Figur 3 erkennbar, weisen die beiden Seitenständer 3, 4 in der vorliegend dargestellten Ausführungsvariante je eine Ausnehmung 39 auf. Über die beiden Seitenständer 3, 4 wird das Querhaupt 1 mit Seitenständern 120, 121 der Presse 100 über Zuganker 113, 114, 115, 116 verbunden (Figur 5), die sich durch die Zuganker-Öffnungen 34, 35, 36, 37 des Querhaupts 1 erstrecken.

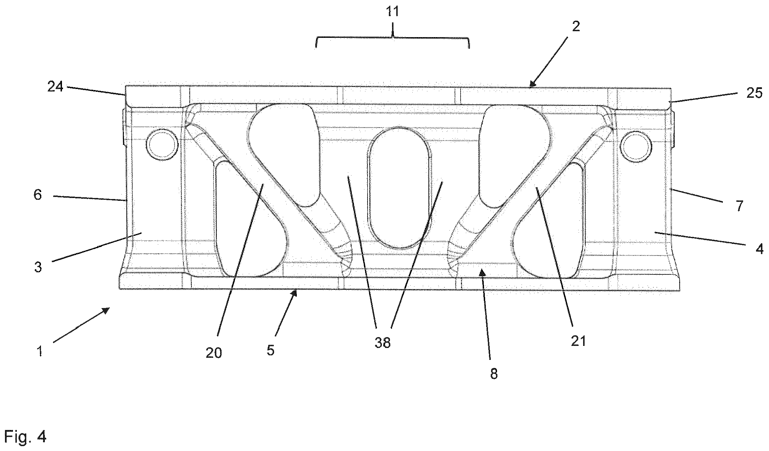

Figur 4 zeigt den Querhaupt 1 gemäß der in Figur 3 gezeigten Ausführungsvariante nochmals in einer seitlichen Darstellung.

In Figur 5 ist eine Ausführungsvariante einer Presse 100 mit einem Oberholm 50 und einem Unterholm 60 gezeigt, die im Wesentlichen der zweiten Ausführungsvariante des Querhaupts 1 entspricht. Bei der vorliegend gezeigten Presse 100 handelt es sich um eine Freiformschmiedepresse, wie sie dem Fachmann aus dem Stand der Technik bekannt ist.

### Bezugszeichenliste

- 1: Querhaupt
- 2: Obergurt
- 3: Seitenständer
- 4: Seitenständer
- 5: Untergurt
- 6: distales Ende
- 7: distales Ende
- 8: Fachwerktragstruktur
- 9: Öffnung
- 10: Öffnung
- 11: mittlerer Bereich
- 12: Presszylinder-Öffnung
- 13: Presszylinder-Öffnung
- 14: Presszylinder-Öffnung
- 15: Presszylinder-Öffnung
- 16: Versteifungsrippe
- 17: Versteifungsrippe
- 18: Versteifungsrippe
- 19: Versteifungsrippe
- 20: Spannungsrippe
- 21: Spannungsrippe
- 22: Spannungsrippe
- 23: Spannungsrippe
- 24: Stirnseite
- 25: Stirnseite
- 26: flächiges Element
- 27: flächiges Element
- 28: Öffnung
- 29: Öffnung
- 30: Fachwerktragstruktur
- 31: Fachwerktragstruktur
- 32: Tragrippen
- 33: Tragrippen
- 34: Zuganker-Öffnung
- 35: Zuganker-Öffnung
- 36: Zuganker-Öffnung
- 37: Zuganker-Öffnung
- 38: Versteifungsrippen
- 39: Ausnehmung
- 50: Oberholm
- 60: Unterholm
- 100: Presse
- 110: Hauptzylinder
- 111: Presszylinder
- 112: Presszylinder
- 113: Zuganker
- 114: Zuganker
- 115: Zuganker
- 116: Zuganker
- 120: Seitenständer
- 121: Seitenständer

## Patentansprüche

1. Querhaupt (1) zur Verwendung als Ober- und/oder Unterholm (50, 60) in einer Presse (100), insbesondere einer Freiformschmiedepresse oder einer Gesenkschmiedepresse, umfassend einen Obergurt (2) sowie einen mit dem Obergurt (2) über einen ersten und einen zweiten Seitenständer (3, 4) verbundenen Untergurt (5), wobei der erste Seitenständer (3) im Bereich eines ersten distalen Endes (6) und der zweite Seitenständer (4) im Bereich eines zweiten distalen Endes (7) des Querhaupts (1) angeordnet ist, wobei
das Querhaupt (1, 50) zwischen den beiden Seitenständern (3, 4) eine Fachwerktragstruktur (8) aufweist, über die der Obergurt (2) und der Untergurt (5) zusätzlich miteinander verbunden sind,
**dadurch gekennzeichnet, dass**
der Obergurt (2) und der Untergurt (5) eine jeweils zentrisch angeordnete und zueinander in einer Flucht liegende Öffnung (9, 10) aufweisen, die einen mittleren Bereich (11) des Querhaupts (1) definieren und zur Verbindung mit einem Hauptzylinder (110) der Presse (100) vorgesehen sind,
wobei der Obergurt (2) und der Untergurt (5) jeweils beidseitig der zentrischen Öffnung (9, 10) eine zueinander in einer Flucht liegende weitere Öffnung (12, 13, 14, 15) zur Verbindung mit einem ersten und einem zweiten Presszylinder (111, 112) der Presse (100) aufweisen,
wobei die Fachwerktragstruktur (8) mehrere quer verlaufende Spannungsrippen (20, 21, 22, 23) umfasst, die sich vom mittleren Bereich (11) des Untergurts (5) in Richtung der Stirnseiten des Obergurts (24, 25) erstrecken und mit den Seitenständern (3, 4) fest verbunden sind, und
wobei jeweils zwei parallel zueinander angeordnete Spannungsrippen (20, 21, 22, 23) über ein flächiges Element (26, 27) miteinander verbunden sind und jedes der flächigen Elemente (26, 27) eine Öffnung (28, 29) aufweist, die in einer Flucht mit den Presszylinder-Öffnungen (12, 13, 14, 15) liegt.

2. Querhaupt (1) nach Anspruch 1, wobei der erste und der zweite Seitenständer (3, 4) eine weitere Fachwerktragstruktur (30, 31) aufweisen.

3. Querhaupt (1) nach Anspruch 1 oder 2, wobei die Fachwerktragstruktur (8) mehrere um die beiden zentrischen Öffnungen (9, 10) angeordnete Versteifungsrippen (16, 17, 18, 19, 38) umfasst, die den Obergurt (2) und den Untergurt (5) im mittleren Bereich (11) des Querhaupts (1, 50) miteinander verbinden.

4. Querhaupt (1) nach Anspruch 3, wobei der Obergurt (2) bogenförmig ausgebildet ist und die mehreren um die beiden zentrischen Öffnungen (9, 10) angeordneten Versteifungsrippen (16, 17, 18, 19) V-förmig ausgebildet sind.

5. Querhaupt (1) nach Anspruch 3, wobei der Obergurt (2) flach ausgebildet ist und die mehreren um die beiden zentrischen Öffnungen (9, 10) angeordneten Versteifungsrippen (38) vertikal ausgebildet sind.

6. Querhaupt (1) nach einem der vorhergehenden Ansprüche, wobei das Querhaupt (1, 50) mittels eines Urformverfahrens, insbesondere eines Gießverfahrens, hergestellt ist.

7. Querhaupt (1) nach einem der vorhergehenden Ansprüche 1 bis 5, wobei das Querhaupt (1, 50) mittels eines 3D-Druckverfahrens hergestellt ist.

8. Presse (100), insbesondere eine Freiformschmiedepresse oder eine Gesenkschmiedepresse, umfassend zumindest ein Querhaupt (1) nach einem der vorhergehenden Ansprüche.

## Claims

1. Crosshead (1) for use as an upper and/or lower beam (50, 60) in a press (100), particularly a free-form forging press or a drop forging press, comprising a top chord (2) and a bottom chord (5) connected with the top chord (2) by way of a first and a second side post (3, 4), wherein the first side post (3) is arranged in the region of a first distal end (6) and the second side post (4) in the region of a second distal end (7) of the crosshead (1), wherein the crosshead (1, 50) has between the two side posts (3, 4) a framework support structure (8) by way of which the top chord (2) and bottom chord (5) are additionally connected together,
**characterised in that**
the top chord (2) and the bottom chord (5) each have a centrally arranged opening (9, 10), which openings are in alignment with one another and define a centre region (11) of the crosshead (1) and are provided for connection with a main cylinder (110) of the press (100),
wherein the top chord (2) and the bottom chord (5) each have on either side of the central opening (9, 10) a further opening (12, 13, 14, 15), which openings are in alignment with one another, for connection with a first and a second press cylinder (111, 112) of the press (100),
wherein the framework support structure (8) comprises a plurality of transversely extending bracing ribs (20, 21, 22, 23) which extend from the centre region (11) of the bottom chord (5) in the direction of the ends of the top chord (24, 25) and are fixedly connected with the side posts (3, 4), and
wherein each two bracing ribs (20, 21, 22, 23) arranged parallel to one another are connected together by way of an area element (26, 27) and each of the area elements (26, 27) has an opening (28, 29) disposed in alignment with the press cylinder openings (12, 13, 14, 15).

2. Crosshead (1) according to claim 1, wherein the first and second side posts (3, 4) have a further framework support structure (30, 31).

3. Crosshead (1) according to claim 1 or 2, wherein the framework support structure (8) comprises a plurality of stiffening ribs (16, 17, 18, 19, 38) which are arranged around the two central openings (9, 10) and which connect the top chord (2) and the bottom chord (5) together in the centre region (11) of the crosshead (1, 50).

4. Crosshead (1) according to claim 3, wherein the top chord (2) is formed to be curved and the plurality of stiffening ribs (16, 17, 18, 19) arranged around the two central openings (9, 10) are formed to V-shaped.

5. Crosshead (1) according to claim 3, wherein the top chord (2) is formed to be flat and the plurality of stiffening ribs (38) arranged around the two central openings (9, 10) are formed to be vertical.

6. Crosshead (1) according to any one of the preceding claims, wherein the crosshead (1, 50) is produced by means of a primary forming method, particularly a casting method.

7. Crosshead (1) according to any one of the preceding claims 1 to 5, wherein the crosshead (1, 50) is produced by means of a 3-D printing method.

8. Press (100), particularly a free-form forging press or a drop forging press, comprising at least one crosshead (1) according to any one of the preceding claims.

## Revendications

1. Tête transversale (1) à utiliser en tant que longeron supérieur et/ou inférieur (50, 60) dans une presse (100), en particulier une presse de forgeage libre ou une presse de forgeage à matrice, comprenant une ceinture supérieure (2) et une ceinture inférieure (5) reliée à la ceinture supérieure (2) par un premier et un deuxième montant latéral (3, 4), le premier montant latéral (3) étant situé dans la zone d'une première extrémité distale (6) et le deuxième montant latéral (4) dans la zone d'une deuxième extrémité distale (7) de la tête transversale (1),
la tête transversale (1, 50) présentant entre les deux montants latéraux (3, 4) une structure porteuse en treillis (8) par laquelle la ceinture supérieure (2) et la ceinture inférieure (5) sont en outre reliées entre elles,
**caractérisée en ce que**
la ceinture supérieure (2) et la ceinture inférieure (5) présentent chacune une ouverture (9, 10) disposée de manière centrale et alignée l'une avec l'autre, qui définit une zone médiane (11) de la tête transversale (1) et est prévue pour la connexion à un cylindre principal (110) de la presse (100),
la ceinture supérieure (2) et la ceinture inférieure (5) présentant chacune, de part et d'autre de l'ouverture centrale (9, 10), une autre ouverture (12, 13, 14, 15), alignées l'une avec l'autre, pour la connexion à un premier et à un deuxième cylindre de presse (111, 112) de la presse (100),
la structure porteuse en treillis (8) comprenant plusieurs nervures de tension (20, 21, 22, 23) s'étendant transversalement de la zone médiane (11) de la ceinture inférieure (5) en direction des faces frontales de la ceinture supérieure (24, 25) et solidement reliées aux montants latéraux (3, 4), et
deux nervures de tension (20, 21, 22, 23) disposées parallèlement l'une à l'autre étant reliées entre elles par un élément plat (26, 27) et chaque élément plat (26, 27) présentant une ouverture (28, 29) qui est alignée avec les ouvertures des cylindres de presse (12, 13, 14, 15).

2. Tête transversale (1) selon la revendication 1, le premier et le deuxième montant latéral (3, 4) présentant une autre structure porteuse en treillis (30, 31).

3. Tête transversale (1) selon la revendication 1 ou 2, la structure porteuse en treillis (8) comprenant plusieurs nervures de renforcement (16, 17, 18, 19, 38) disposées autour des deux ouvertures centrales (9, 10), qui relient la ceinture supérieure (2) et la ceinture inférieure (5) dans la zone médiane (11) de la tête transversale (1, 50).

4. Tête transversale (1) selon la revendication 3, la ceinture supérieure (2) étant de forme arquée et les plusieurs nervures de renforcement (16, 17, 18, 19) disposées autour des deux ouvertures centrales (9, 10) étant de forme en V.

5. Tête transversale (1) selon la revendication 3, la ceinture supérieure (2) étant de forme plate et les plusieurs nervures de renforcement (38) disposées autour des deux ouvertures centrales (9, 10) étant de forme verticale.

6. Tête transversale (1) selon l'une quelconque des revendications précédentes, la tête transversale (1, 50) étant fabriquée par un procédé de formage, en particulier un procédé de coulée.

7. Tête transversale (1) selon l'une quelconque des revendications 1 à 5, la tête transversale (1, 50) étant fabriquée par un procédé d'impression 3D.

8. Presse (100), en particulier une presse de forgeage libre ou une presse de forgeage à matrice, comprenant au moins une tête transversale (1) selon l'une quelconque des revendications précédentes.
